# EUROPEAN PATENT APPLICATION

(11) **EP 1 580 860 A1**
(43) Date of publication of application: **28.09.2005**
(21) Application number: 04425214.6
(22) Date of filing: 26.03.2004
(51) Int. Cl.: H02H 5/12

(54) **A radiofrequency system for the protection from electric shock hazard**

(71) Applicant: Betti, Nicola, 09018 Sarroch (IT)
(72) Inventor: Betti, Nicola, 09018 Sarroch CA (IT); Spanu, Matteo, 09010 Pula CA (IT); Gessa, Domenico, 09018 Sarroch CA (IT)
(74) Representative: Papa, Elisabetta

(57) **Abstract**

A radiofrequency system for the protection, comprising a central unit (1) linkable to a main power board for the supplying of electric power to clients, and at least one remote unit (2) portable by a user, characterised in that said remote unit (2) is apt to detect hazardous values of voltages or electric fields near to or into contact with the user, and to transmit a coded signal of hazardousness to said central unit (1).

## Description

The present invention refers to a radiofrequency system for the protection from electric shock hazard, and, more precisely, to a radiofrequency system for the protection in which it is provided the use of a portable device for preventing electric shock hazard or electrocution to a user.

It is known that in fields such as the civil, building, industrial, etc. in which AC voltages potentially harmful to operators are used, there is the need of providing a high safety of the operative conditions of the operators themselves, due to the possibility to the latter to come into contact with live metallic and/or electric components. In particular, this need is markedly felt among those more exposed to such a risk as operators in building yards, railway maintenance, machine shops, etc.

Therefore, with this aim control systems having electric differential devices (the so-called 'lifesavers') are used, these devices having the peculiarity of cutting out the supplying of electric power to the cable at which the leakage of current takes place at the overstepping of a certain predetermined value (e.g., above a value dangerous to humans).

These known devices, which are made compulsory in many cases by various Acts and norms, entail the drawback of not being functional when the user wears insulating shoes, or works on a rubber-coated (or other insulator-coated) floor and comes into contact with one or more live leads: in these cases, the lifesaver device do not detects any leakage in the circuit and does not cut out the electric power supply, since the protective device functions upon loads between the lead and earth, therefore sensing the person as if it were a further load in the circuit and does not cut out the power supplying.

Therefore, to date this situation of possible and real electric hazard is still unsolved by the extant automatic intervention devices, often causing serious accidents.

Hence, the present invention examined herein constitutes a real inventive step with respect to the actual protection systems, not only since it is based on operational principles substantially differing from those deployed to date, but also because it aims at effectively intervening in all those cases in which the conventional protective devices would prove useless, integrating to them and not overlapping thereto.

In order to overcome the drawbacks of the devices of the state of the art, the present invention provides a radiofrequency system for the protection comprising at least one portable electronic device for detecting an electric field, applied onto an operator, and a receiving device applied to the main board related to the electric distribution.

According to the present invention, the portable device is capable of detecting the presence of an electric field or the passage of an electric shock or hazardous current flow on the user's body and, by means of a radiofrequency system, of cutting out the supply from the main board or merely from the involved line, thereby safeguarding the wearer of the device.

In fact, the device of the present invention detects any presence of a hazardous leakage voltage or current directly on the user's body, and intervenes 'selectively and individually' when the person at issue accidentally contacts with a component apt to transmit an electric shock to the former.

Advantageously, the radiofrequency system of the present invention protects the user also in those situations where the high-sensitivity differential device of the state of the art cannot operate, e.g. in case the user comes into contact with one or more phases and wears insulating shoes, is on an insulating flooring or is insulated from the ground such as a ladder or similar.

Hence, the present invention provides a radiofrequency system for the protection substantially as set forth in claim 1.

Hereinafter, it will be provided a detailed description of a preferred embodiment of the radiofrequency system for the protection of the present invention, given by way of example and without limitative purposes, making reference to the annexed drawings, wherein:
figure 1 is a schematic view of a component part of the system of the present invention;
figure 2 is a schematic view of another component part of the system of the present invention;
figure 3 is a flow chart of the operation logic of the system of the present invention;
figure 4 is an illustrative example of application of the system of the present invention in a building yard;
figure 5 is another illustrative example of application of the system of the present invention; and
figure 6 is a schematic view of different parts of the system of the present invention, according to a different embodiment thereof.

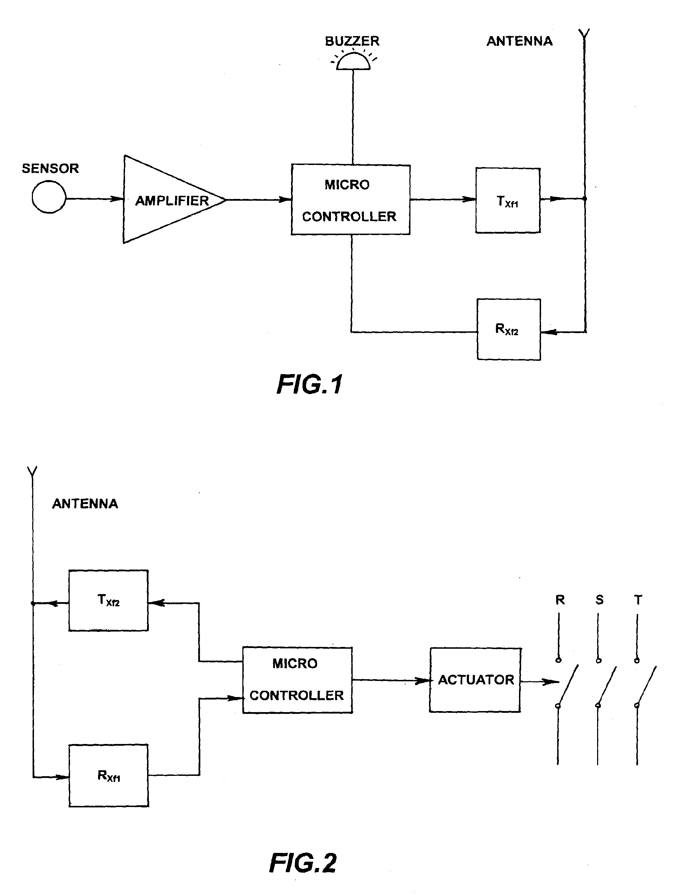

Hereinafter, reference will be made to figures 1 and 2. According to the invention, the radiofrequency protective system comprises a first device or remote unit 1 comprising an electric shock detection circuit, apt to be housed in a portable peripheral (armlet, helmet, etc. not shown), and a central device or fixed unit 2 housed in the main board for supplying electric power.

In figure 1 it is shown the electronic circuit of the remote unit 1 for detecting the electric shock and transmitting a proportional digital pulse. As already described, this electric circuit can be placed inside any kind of containing device apt to be worn-on by the user (e.g., an armlet, a helmet, etc.), and can be energised by a low-voltage power supply system made of batteries. It comprises a power switch (not shown in figure), an electric field sensor 3 that may also be external to the containing device, a signal amplifier 4, a control microsystem 5, one or more indicators, a buzzer or acoustic indicator 6 signaling a hazardous condition, a transmitter 7 (Txf1), a receiver 8 (Rxf2) and the related antenna 9.

In figure 2 it is shown a radio receiver electronic circuit arranged in said central unit 2, which is apt to be installed in a control board (not shown in figure), and incorporating the related digital pulse decoding system overseeing the operation of an electrical and/or mechanical breaking system for the checking of the opening of the breaker switch of said control board.

As it is apparent in the figure, the circuit provides an antenna 10, a receiver 12 (Rxf1), a transmitter 11 (Txf2), a microcontroller 13, an actuator 14 and the breaker switch 15 on the control board.

The radio receiver electronic circuit of figure 2 is located inside a typical panel that can be fit to DIN modules or the like, so as to easily be inserted in a standard control board. Moreover, the device is fitted with its own stabilised power supply circuit connected to the same control board in which it is installed.

During designing, particular care was taken to implement a timed communication between the transmitter block and the receiver block. In fact, this interaction between the two blocks underlies a correct operation of the device.

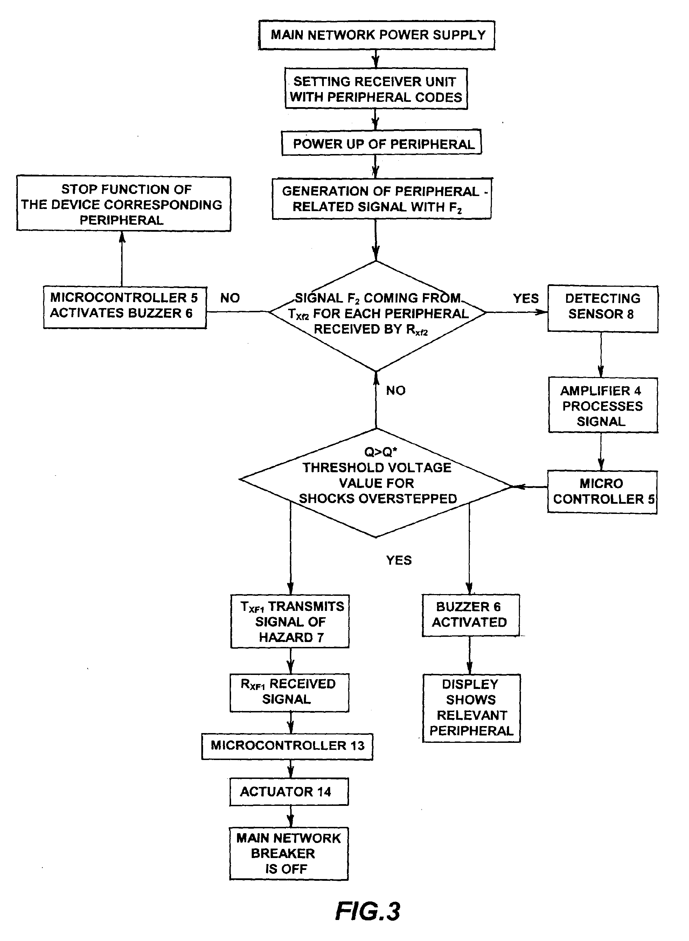

Hereinafter, a detailed description of the radiofrequency protective system of the present invention will be given, with reference to the operative flow chart of figure 3.

The electric field/voltage sensor 3 (figure 1) is preferably arranged near to or into contact with a small surface of the user's body skin, so as to reliably detect the electric field value on the user's body following to the accidental contact with a live lead. The signal 4 is first amplified and filtered, to be then sent to the microcontroller 5 for evaluating the value of the sensed voltage with respect to a pre-programmed hazard values.

In case of evaluation of an hazard condition, a signal coded with radio frequency f1 is sent to the control unit (figure 2), with the entailed break of the power in the main line, or breaking of the relevant line related to the power supplying decoded in the hazard signal.

Concomitantly, there are activated the buzzer 6 and a light signal (e.g., a LED), highlighting the occurrence of the hazardous condition to the user.

The function of the receiver 8 (Rxf2) is to receive the signals coded with the radio frequency f2 coming from the transmitter 11 (Txf2) of the control unit located in the main board, and further to check whether the radio signal be actually exchanged between the two devices of the system, i.e. that there always be timed communication conditions.

In case of failure to receive the radio signals from the control unit, the buzzer 6 activates to inform the operator that the two devices are out of range and that it would be advisable to temporarily discontinue the use of the device.

The buzzer 6 activates also when the batteries of the low-voltage power supply system are near to exhaustion. The batteries can be of the internal kind and/or rechargeable, and may be cyclically recharged by an external device (not shown in figure) connected to the electric network.

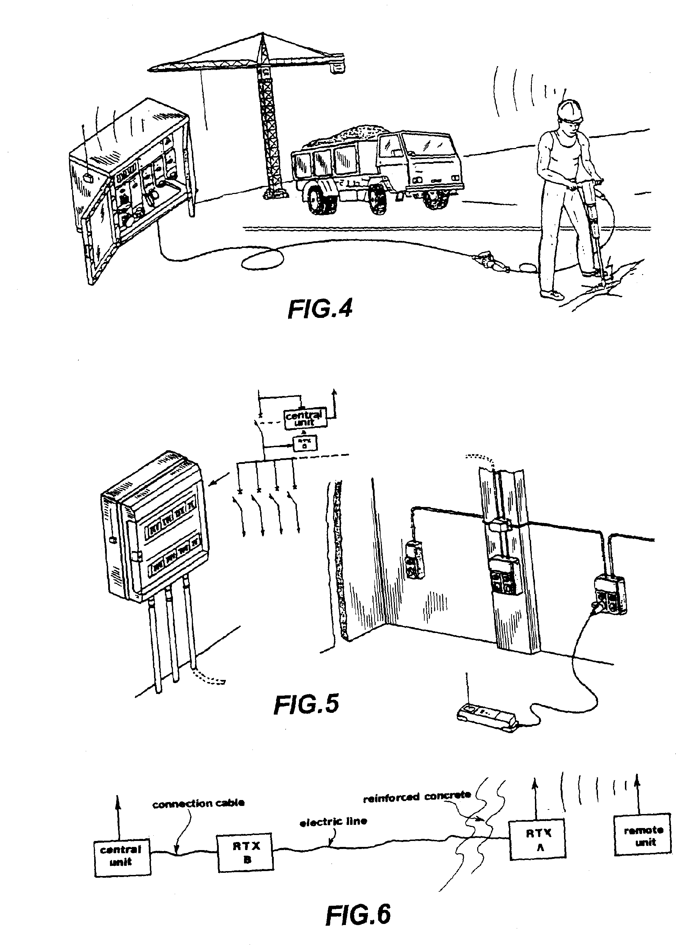

As it is apparent from figure 4, the receiver control unit of the central unit (figure 2) is supplied by the main electric network and, in order to provide uninterrupted operation even after a discontinuance, by means of a self-contained set of rechargeable batteries, always powered by the main electric network. Such a control unit controls the supplying of electric power to clients by means of an (internal or external) actuator 14.

For operation, the control unit is programmed beforehand with the identification codes of each single remote device of each user (optionally mounted on an armlet or a helmet) and continually transmits, via the transmitter 11 (Txf2) the codes of the active peripherals with a radio frequency f2. The related signals are used by the peripherals in order to check that there be communication, and that radio transmission field range be ensured.

When a peripheral detects a condition of hazardousness, it sends, via the transmitter 7 (Txf1), the related radio signal with frequency f1, received by the receiver 12 (Rxf1) to the control unit.

In this case, the microcontroller 13 activates the actuator 14, breaking the supplying of electric power to the main circuit by opening the switch 15 with the ensuing safeguarding of the physical integrity of the operator wearing on the peripheral related to the signaling of hazardousness. Concomitantly, the control unit displays the code of the peripheral under alarm (not shown in the figures) on a display.

The main advantage of the system of the present invention is that each control unit can manage one or more peripherals worn-on by different operators, independently the one from the other.

Moreover, it is provided that, prior to the actual use, the full operational condition of the protection system may be tested by means of a test push-button installed in each peripheral. More precisely, by pressing said push-button the coded radio signal is transmitted to the control unit located in the main board, and if all is perfectly operational, the supplying of electric power will be cut out, and the operating test is achieved.

According to another aspect of the present invention and with reference to figure 5, the remote unit and the central one may be assisted in their intercommunicating function also by a wave conveying system (such as a line o similar), in case the remote unit had to be or work in a closed or shielded environment, e.g. on premises made of reinforced concrete. In this case, the related signal could be subjected to static (noise) not allowing a safe linking to the central unit. Therefore, it may advantageously be provided a radio link with conveyed waves exploiting the transmission of signals via the same electric power supply line, from the main board to the working site of the operator.

According to this alternative embodiment and to figure 6, it is shown therein a circuit diagram in which there is provided the conveying of the waves through the electric line by means of an electric circuit to/from the devices of the protective system of the present invention. In this case, the communication between peripheral and central unit is bi-directional, exploiting the radio link and the extant electric cables. The block RTX B can also be contained in the central unit, since both the block RTXB and the central unit communicate via cable on a low frequency. On the other hand, the block A communicates with the peripheral on a high frequency, and therefore it is provided a suitable transceiver antenna.

According to this second embodiment of the protective system of the present invention, advantageously the system is capable of having each remote unit communicate with the central unit at remarkable distances and anyhow under conditions where radio frequency covering lacks, like e.g. in galleries, mines, etc.

## Claims

1. A radiofrequency system for the protection from electric shocks, comprising a central unit (1) linkable to a main electric power supply panel for the supplying of electric power to clients, and at least one remote unit (2) portable by a user,
**characterised in that** said remote unit (2) has a sensor (3) apt to detect hazardous values of voltages or electric fields near to or contacting with the user, and to transmit a coded signal of hazardousness to said central unit (1) .

2. The radiofrequency system for the protection from electric shocks according to the preceding claim, wherein the remote unit (2) is apt to process said signal coming from the sensor (3) by comparing the same to preset values that are proportional to electric field values, and wherein at the overstepping of a determined threshold value of electric field said remote unit (2) transmits a signal to the central unit (1) so that the latter, by cooperating with said main power supply panel, breaks the supplying of power.

3. The radiofrequency system for the protection from electric shocks according to the preceding claim, wherein said central unit (1) comprises:
- an antenna (10);
- a receiver (12);
- a transmitter (11);
- a microcontroller (13); and
- an actuator (14) connected to a breaker switch (15) of a control panel.

4. The radiofrequency system for the protection from electric shocks according to claim 1 or 2, wherein said remote unit (2) comprises:
- An electric field sensor (3);
- An amplifier (4) of signals coming from said sensor (3);
- a microcontroller (5);
- a transmitter (7);
- a receiver (8); and
- an antenna (9) .

5. The radiofrequency system for the protection from electric shocks according to the preceding claim, wherein said remote unit (2) further comprises a power switch.

6. The radiofrequency system for the protection from electric shocks according to claim 4 or 5, wherein said remote unit (2) further comprises one or more indicators.

7. The radiofrequency system for the protection from electric shocks according to claim 4 or 5 or 6, wherein said remote (2) unit further comprises an acoustic indicator (6).

8. The radiofrequency system for the protection from electric shocks according to claim 4, wherein said remote unit (2) further comprises power supply units, such as batteries or the like.

9. The radiofrequency system for the protection from electric shocks according to claim 3, wherein said central unit (1) further comprises power supply units, such as batteries or the like.
